# EUROPEAN PATENT APPLICATION

(11) **EP 1 936 978 A2**
(43) Date of publication of application: **25.06.2008**
(21) Application number: 07024924.8
(22) Date of filing: 21.12.2007
(51) Int. Cl.: H04N 7/16

(54) **Re-encrypting encrypted content on a video-on-demand system**

(30) Priority: 22.12.2006 US 615706
(71) Applicant: Nortel Networks Limited, St Laurent, Québec H4S 2A9 (CA)
(72) Inventor: Soukup, Martin Jan, Ottawa Ontario K1V 1Y3 (CA)
(74) Representative: Boyce, Conor

(57) **Abstract**

The present invention re-encrypts encrypted content on a Video-on Demand (VoD) system. A device on the VoD system, such as a server, obtains the encrypted version of the content on the VoD system and the key, the first key, that was used to encrypt that version. The server decrypts the encrypted content using that key, re-encrypts the decrypted content using a second key, and provides the re-encrypted content to the VoD system, which provides it to a user. The server then deletes from its files any other version of the content, including any unencrypted, decrypted and re-encrypted version, and all keys, including the first and second key.

## Description

### Field of the Invention

The present invention relates to Video-on-Demand systems and, in particular, to re-encrypting encrypted content on a Video-on-Demand system.

### Background of the Invention

Video-on-Demand (VoD) systems allow a user the freedom and flexibility to select, order, receive and watch videos at the times the user chooses. To enable this service, the user will normally contract with a content source, such as HBO, Comcast, Showtime, or the like, either directly or through the VoD service provider, who, usually, will be the user's telecommunication service provider. The content source provides, directly or indirectly, the unencrypted content, which for purposes hereof shall be understood to include video, audio and other forms of graphic or textual content, to the VoD service provider who encrypts each piece of content with a unique key and stores the encrypted content on the VoD system. Typically, the VoD service provider stores the encrypted content in a VoD server. When a user orders a video, the VoD service provider sends that particular encrypted content to the user's equipment, such as a set-top box with a television, over the telecommunication service provider's network, which may include the Internet. To assure that only the user who contracted for the VoD service and ordered the particular video is allowed to watch that video, the VoD service provider authenticates the user's identity and separately sends the key to the user's equipment so that the video can be decrypted and presented to the user.

For security purposes, the encrypted content on the VoD system is periodically re-encrypted using a new, different key. Traditionally, the re-encryption process entails having the content source provide another version of the content to the VoD service provider for encryption with the new key. This adds complexity due to the need for re-delivery to all distributor sites. Alternatively, the unencrypted content may be stored on the VoD server or other system. As such, at any one time, multiple versions of the content and corresponding keys must be stored on the VoD system. Having multiple versions of the content, including an unencrypted version, results in reduced security and the inefficient use of the storage capacity of the VoD system. Finally, the keys may be stored with the encrypted content, but this reduces security and greatly increases the complexity of updating, deleting, and managing the content. Accordingly, a need exists for a method and system for re-encrypting currently encrypted content on a VoD system and the present invention satisfies such a need.

### Summary of the Invention

The present invention re-encrypts currently encrypted video, audio and other forms of graphic or textual content on a VoD or similar system. A device on the VoD system, such as a server, obtains the encrypted version of the content currently on the VoD system and the first key that was used to encrypt that version. The server decrypts the currently encrypted content (which may never be stored) using the first key, re-encrypts the newly decrypted content using a second key, and provides the re-encrypted version of the content to the VoD system. The server then deletes from its files any other versions of the content, including any unencrypted versions, and all keys, including the first and second keys.

The VoD system provides the re-encryption process by entitling the server to perform the re-encryption. The VoD system entitles the server through the use of conditional access device on the VoD system. The conditional access device allows the server to access to the encrypted content on the VoD system. The server has software, which includes a conditional access agent responsive to communication with the conditional access device. The server receives a communication from the conditional access device, which includes the first key and permission for the server to perform the re-encryption of the encrypted content and the first key, which was used to encrypt the currently encrypted content. The server also receives instruction from middleware on the VoD system. In response to the instruction, the conditional access agent performs and controls the receiving, decrypting and re-encrypting of the content by the server. The server provides the re-encrypted content to the VoD system, which then provides it to the user's equipment for presentation to a user.

### Brief Description of the Drawing Figures

The accompanying drawing figures incorporated in and forming a part of this specification illustrate several aspects of the invention, and together with the description serve to explain the principles of the invention.
FIGURE 1 is a graphic representation of an exemplary Vdeo-on-Demand (VoD) system.
FIGURES 2A and 2B are communication flow diagrams outlining the process for encrypting content on a VoD system in the prior art.
FIGURE 3 is the graphic representation of the exemplary VoD system of Figure 1 with one embodiment of the present invention incorporated therein.
FIGURE 4A and 4B are communication flow diagrams outlining the process for re-encrypting already encrypted content on a VoD system according to one embodiment of the present invention.
FIGURE 5 is a block representation of a server for re-encrypting encrypted content according to an embodiment of the present invention.

### Detailed Description of the Preferred Embodiments

The present invention re-encrypts currently encrypted content on a Video-on-Demand (VoD) system. The VoD system does this by entitling a device in the VoD system, such as a server, to perform the re-encryption. In the preferred embodiment, a pre-encryption server is used to perform the re-encryption. The VoD system entitles the pre-encryption server through the use of conditional access device, such as a conditional access server. The conditional access server allows the pre-encryption server to access the encrypted content contained in the VoD system.
The conditional access server also allows the pre-encryption server to access the key, hereinafter, the first key, which was used to encrypt the encrypted content. The pre-encryption server has software, which includes a conditional access agent responsive to communication from the conditional access server. The pre-encryption server receives communication from the conditional access server, which includes permission for re-encrypting the encrypted content and the first key. The pre-encryption server, also, receives communication from a middleware server in the VoD system. The communication from the middleware server instructs the pre-encryption server to request the encrypted content from the VoD server.

The pre-encryption server requests and receives the encrypted content and decrypts it using the first key. The pre-encryption server then uses a new key, a second key, which is different from the first key, to re-encrypt the decrypted content, and provides the re-encrypted content to the VoD system. The pre-encryption server then deletes from its files the first and second keys and any other versions of the content, including any unencrypted version, the VoD server replaces the encrypted content item with the re-encrypted content item, and the conditional access system may revoke the permissions granted to the pre-encryption server. This last step is not explicitly necessary, since the granted rights relate to a content item that is no longer available. Prior to delving into the details of the present invention, an overview of a VoD system and the process for encrypting content is described.

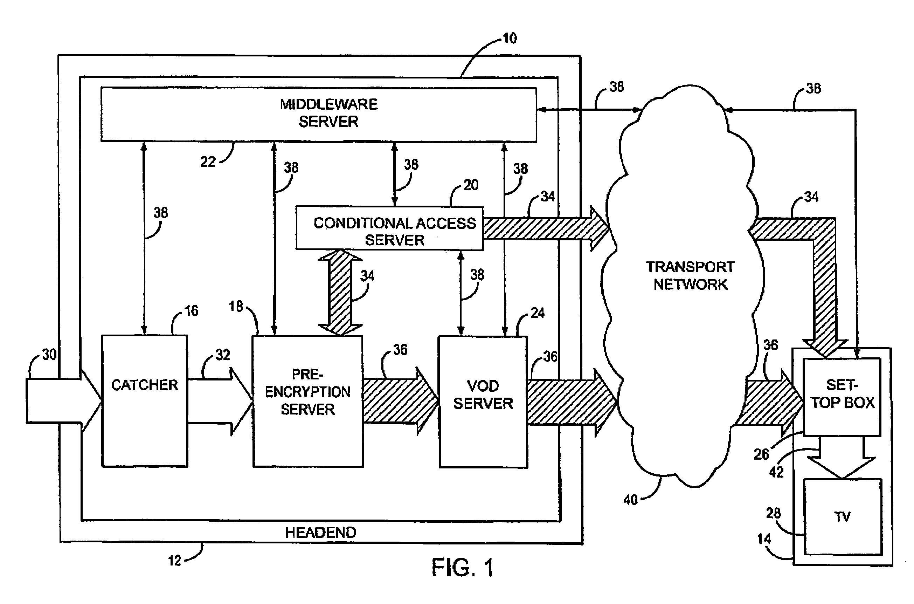

Figure 1 shows an exemplary VoD system 10 in a service provider's headend 12 and a customer premises 14. The VoD system 10 includes a catcher 16, a pre-encryption server 18, a conditional access server 20, a middleware server 22 and a VoD server 24. The customer premises 14 shows the user's equipment, which includes a set-top box 26 and a television (TV) 28, which also can be any monitor or other visual and aural presentation device. The catcher 16 receives content 30 from a content source (not shown). The catcher 16 may provide any functions in order to receive and initially process the content 30, such as authentication. The catcher 16 sends unencrypted content 32 to the pre-encryption server 18. The pre-encryption server 18 accesses a first key 34. The pre-encryption server may generate the first key 34 or may receive the first key 34 from the conditional access server 20. The pre-encryption server 18 then encrypts the unencrypted content 32 using the first key 34 and sends the encrypted content 36 to the VoD server 24.

The VoD server 24 stores the encrypted content 36 and when requested, sends via the transport network 40 the encrypted content 36 to the user's equipment, particularly, to the set-top box 26 in the customer premises 14. The conditional access server 20 stores the first key 34 in its files and sends, via the transport network 40, the first key 34 or related materials to the set-top box 26. The middleware server 22 provides overall management and control of the VoD system 10 through communication links 38 with the other components in the VoD system 10 and with the set-top box 26. The middleware server 22 also performs any subscription control, billing and authenticating of the user and providing information to the user of the videos that are available on the VoD system 10.

The set-top box 26 receives the encrypted content 36 from the VoD server 24 and the first key 34 from the conditional access server 20 via a transport network 40, decrypts the encrypted content 36 using the first key 34 and provides the decrypted content 42 to the TV 28 for presentation to a user. The transport network 40 is the network over which the service provider provides its services to the user, which may include the Internet, cable network, telephone wireline network, cellular, satellite or other wireless network, or the like. As such, although not shown in figure 1, the transport network 40 is understood to include a broadband access network and any edge and gateway devices necessary to support the delivery of content by the VoD system 10 to the set-top box 26. One of ordinary skill in the art will understand that other components and devices may be incorporated in a VoD system 10.

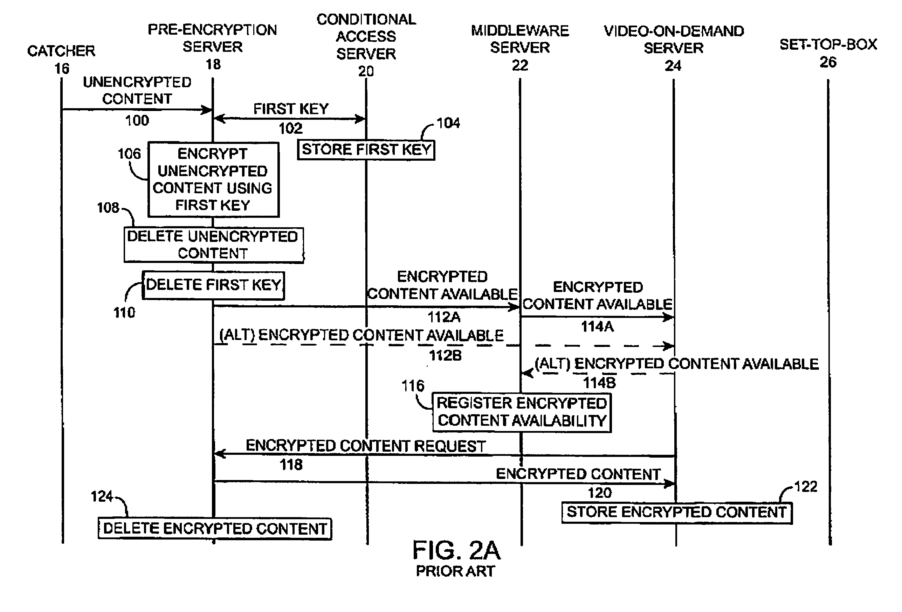

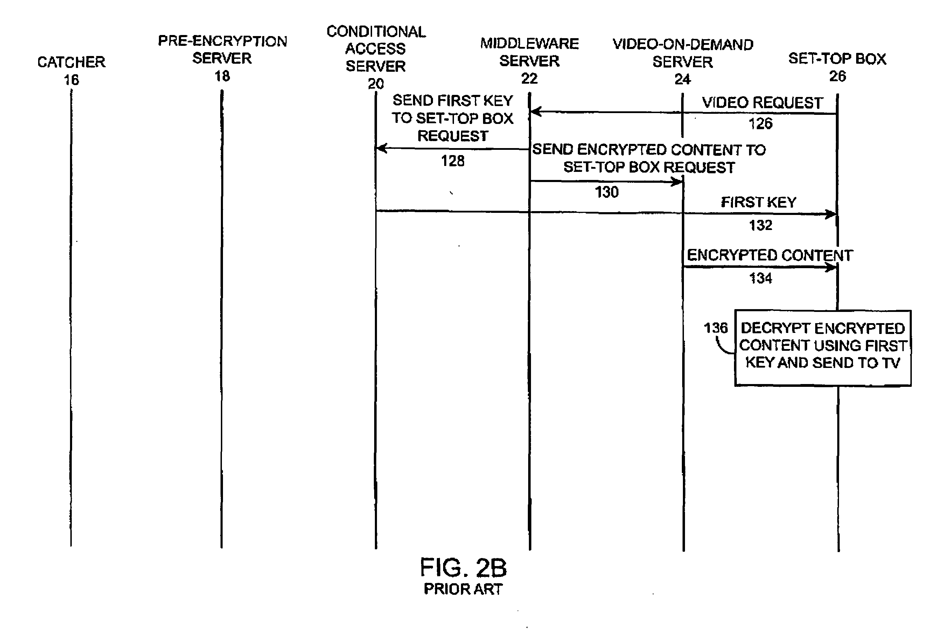

Figures 2A and 2B illustrate a communication flow diagram outlining the process for encrypting content on a VoD system in the prior art. The pre-encryption server 18 receives the unencrypted content 32 from the catcher 16 (step 100). The pre-encryption server 18 accesses the first key by either receiving the first key 34 from the conditional access server 20, or by generating the first key 34. In such a case, the pre-encryption server 18 advises the conditional access server 20 that it has generated the first key 34 and identifies the first key 34 to the conditional access server 20 (step 102). The conditional access server 20 stores the first key 34 or related material in a file in its memory (step 104). The pre-encryption server 18 then encrypts the unencrypted content 32 using the first key 34 (step 106).

After completing the encryption of the unencrypted content 32, the pre-encryption server 18 deletes the unencrypted content 32 from its files (step 108) and deletes the first key from its files (step 110). The pre-encryption server 18 then sends a message to the middleware server 22 advising the middleware server 22 of the availability of the encrypted content 36 (step 112A). The middleware server 22 sends a message to the VoD server 24 advising the VoD server 24 of the availability of the encrypted content 36 (step 114A). Alternatively, the pre-encryption server 18 can send a message directly to the VoD server 24 advising the VoD server 24 of the availability of the encrypted content 36 (112B). In such a case, the VoD server 24 sends a message to the middleware server 22 advising the middleware server 22 of the availability of the encrypted content 36 (step 114B). In either case, the middleware server 22 registers the availability of the encrypted content 36 in its files (step 116).

The VoD server 24 may send a request to the pre-encryption server 18 to send the encrypted content 36 to the VoD server 24 (step 118). The pre-encryption server 18 sends the encrypted content 36 to the VoD server 24 (step 120). The VoD server 24 stores the encrypted content 36 in its files (step 122) and may delete the encrypted content 36 from its files (step 124). When the user wants to order a video, the user sends a request via the set-top box 26 to the middleware server 22 (step 126). The middleware server 22 then sends a communication to the conditional access server 20 directing the conditional access server 20 to send the first key 34 or related material to the set-top box 26 (step 128) and sends a communication to the VoD server 24 directing the VoD server 24 to send the encrypted content 36 to the set-top box 26 (step 130). The conditional access server 20 sends the first key 34 to the set-top box 26 (step 132) and the VoD server 24 sends the encrypted content 36 to the set-top box 26 (step 134). The set-top box 26 decrypts the encrypted content 36 using the first key 34 and sends the decrypted content 42 to the TV 28 (not shown on Figure 2) (step 136).

For security purposes, the encrypted content on the VoD server 24 is periodically re-encrypted using a second key, which is different from the first key. Traditionally, the re-encryption process entails having the content source provide another version of the content to the VoD service provider for encryption with the second key. Accordingly, the process as described above is repeated using a second key on a new version of the content received from the content source. As such, at any one time, multiple versions of the content and corresponding keys must be stored on the VoD system 10. Having multiple versions of the content, including an unencrypted version, and corresponding keys results in reduced security, the inefficient use of the storage capacity of the VoD system 10, and greatly increases the complexity of updating, deleting and managing the content.

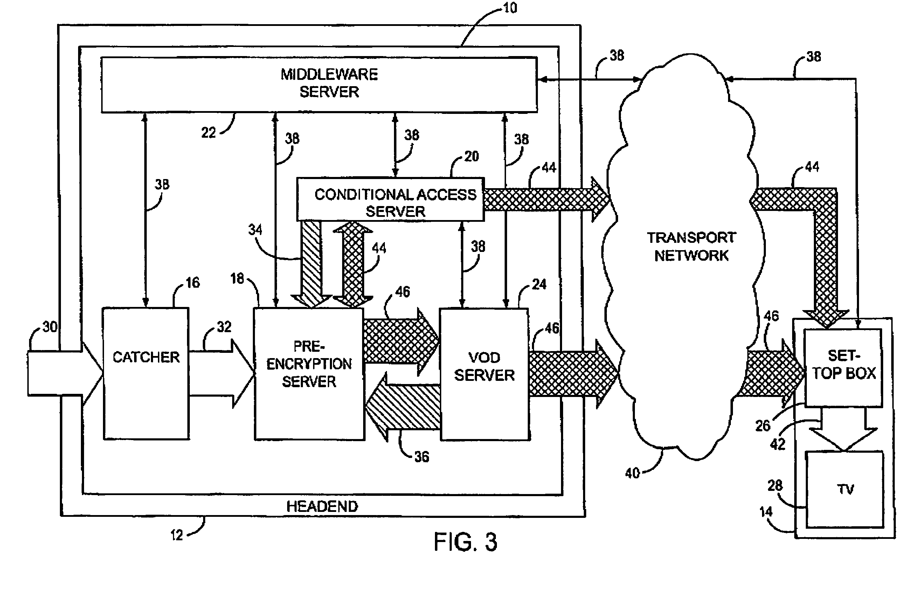

Figure 3 shows the exemplary VoD system 10 of Figure 1 with one embodiment of the present invention incorporated therein to overcome the above mentioned drawbacks. Periodically, the middleware server 22 determines that it is necessary to re-encrypt the encrypted content 36 with a second key 44, which is different from the first key 34. Upon such determination, the middleware server 22 communicates with the conditional access server 20 instructing the conditional access server 20 to temporarily entitle the pre-encryption server 18 to re-encrypt the encrypted content 36. Such entitlement includes the first key 34 and permission to receive and decrypt the encrypted content 36 using the first key 34 to produce decrypted content.

The pre-encryption server 18 then accesses the second key 44. The pre-encryption server 18 may generate the second key 44 or may receive the second key 44 from the conditional access server 20. The conditional access server 20 communicates with the pre-encryption server 18 concerning the second key 44, and stores the second key 44 or related material in a file in its memory. The middleware server 22 instructs the pre-encryption server 18 to request the encrypted content 36 from the VoD server 24 and to perform the re-encryption process. The pre-encryption server 18 requests the encrypted content 36 and, upon receipt of the encrypted content 36, the pre-encryption server 18 decrypts the encrypted content 36 using the first key 34 to produce decrypted content and re-encrypts the decrypted content using the second key 44 to produce re-encrypted content 46. The pre-encryption server 18 then sends the re-encrypted content 46 to the VoD server 24 where it is stored, replacing the encrypted content 36 for new requests. The VoD server 24 sends the re-encrypted content 46 to the set-top box 26 in the same manner as it did the encrypted content 36. Similarly, the conditional access server 20 sends the second key 44 to the set-top box 26 in the same manner as it did the first key 34. The set-top box 26 decrypts the re-encrypted content 46 using the second key 44 and provides the decrypted content 42 to the TV 28.

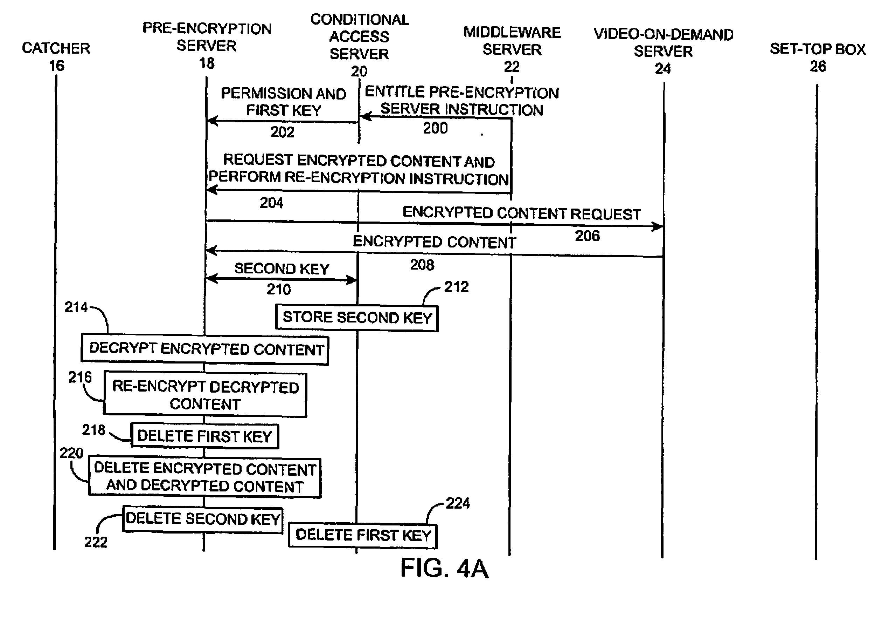

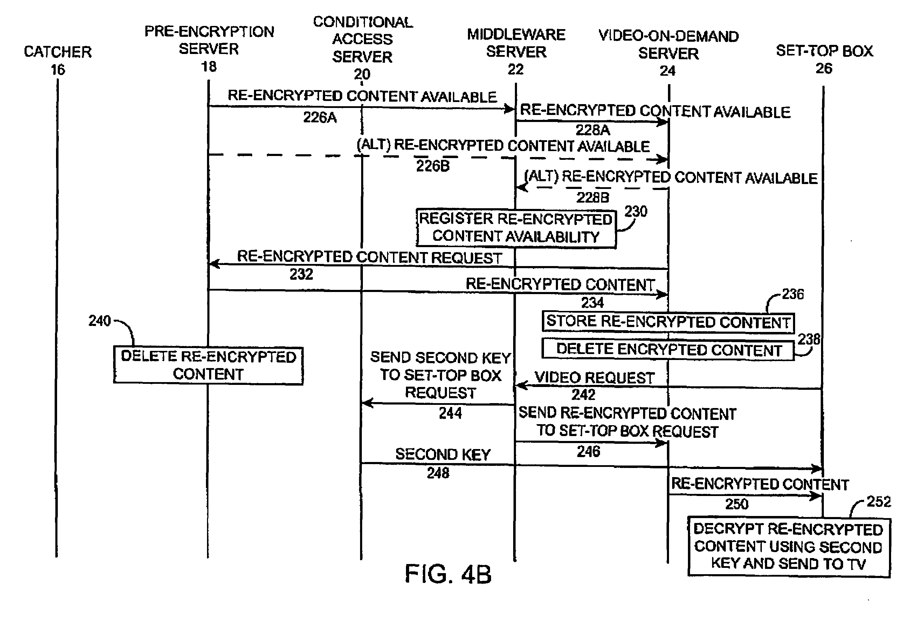

Figure 4A and 4B illustrate a communication flow diagram outlining the process for re-encrypting content in a VoD system 10 according to one embodiment of the present invention. Initially the middleware server 22 sends a communication to the conditional access server 20 instructing the conditional access server 20 to temporarily entitle the pre-encryption server 18 to perform the re-encryption process (step 200). In response to the middleware server's 22 instruction, the conditional access server 20 entitles the pre-encryption server 18 by sending to the pre-encryption server 18 the first key 34, a series of keys, or related material, and permission to receive and decrypt the encrypted content 36 to produce decrypted content (step 202). The middleware server 22 then instructs the pre-encryption server 18 to request the encrypted content 36 from the VoD server 24 and perform the re-encryption process (step 204). The pre-encryption server 18 requests the encrypted content 36 from the VoD server 24 (step 206). The VoD server 24 then sends to the pre-encryption server 18 and the pre-encryption server 18 receives the encrypted content 36 (step 208). The pre-encryption server 18 accesses the second key 44 by either receiving the second key 44 from the conditional access server 20 or by generating the second key 44. In such a case, the pre-encryption server 18 identifies the second key 44, key series, or related material to the conditional access server 20 (step 210). The conditional access server 20 stores the second key 44 in a file in its memory (step 212).

The pre-encryption server 18 decrypts the encrypted content 36 using the first key 34 (step 214) to produce decrypted content and re-encrypts the decrypted content using the second key 44 to produce the re-encrypted content 46 (step 216). The pre-encryption server 18 then deletes the first key 34 from its files (step 218), and deletes the encrypted content 36, decrypted content 42, and second key 44 from its files (steps 220 and 222). The conditional access server 20 may also delete the first key 34 from its files (step 224).

The pre-encryption server 18 sends a message to the middleware server 22 advising the middleware server 22 of the availability of the re-encrypted content 46 (step 226A). The middleware server 22 sends a message to the VoD server 24 advising the VoD server 24 of the availability of the re-encrypted content 46 (step 228A). Alternatively, the pre-encryption server 18 can send a message directly to the VoD server 24 advising the VoD server 24 of the availability of the re-encrypted content 46 (step 226B). In such a case, the VoD server 24 sends a message to the middleware server 22 advising the middleware server 22 of the availability of the re-encrypted content 46 (step 228B). In either case, the middleware server 22 registers the availability of the re-encrypted content 46 in its files (step 230).

The pre-encryption server 18 may receive a request from the VoD server 24 to send the re-encrypted content 46 to the VoD server 24 (step 232) and sends the re-encrypted content 46 to the VoD server 24 (step 234). After sending the re-encrypted content 46 to the VoD server 24, the VoD server 24 stores the re-encrypted content 46 in its files (step 236) and deletes the encrypted content 36 from its files (step 238). The pre-encryption server 18 may also delete the re-encrypted content 46 from its files (step 240). When the user wants to order a video, it sends a request via the set-top box 26 to the middleware server 22 (step 242), whereupon the middleware server 22 sends a communication to the conditional access server 20 directing the conditional access server 20 to send the second key 44 to the set-top box 26 (step 244). The middleware server 22 also sends a communication to the VoD server 24 directing the VoD server 24 to send the re-encrypted content 46 to the set-top box 26 (step 246). The conditional access server 20 then sends the second key 44 to the set-top box 26 (step 248) and the VoD server 24 sends the re-encrypted content 46 to the set-top box 26 (step 250). The set-top box 26 decrypts the re-encrypted content 46 using the second key 44 and sends the decrypted content 42 to the TV 28 (not shown on Figure 4) (step 252).

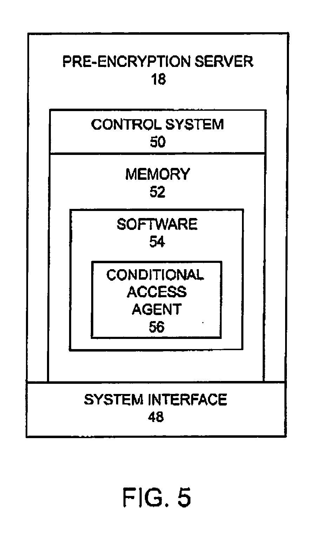

Figure 5 is a block diagram of a server in the VoD system 10 used for decrypting the encrypted content 36 to produce decrypted content and re-encrypting the decrypted content to produce re-encrypted content 46 according to an embodiment of the present invention. In this embodiment, the server is the pre-encryption server 18. The pre-encryption server 18 has at least one system interface 48, which allows communication with the other components of the VoD system 10 and facilitates re-encrypting content on the VoD system 10. The pre-encryption server 18 contains at least one control system 50 associated with the at least one system interface 48 and having sufficient memory 52 with necessary software 54 to perform the receiving, encrypting, decrypting and re-encrypting of the content. The memory 52 and the software 54 are also sufficient to perform secure storing of the unencrypted content 32, the encrypted content 36, the decrypted content and re-encrypted content 46 as well as the first key 34 and the second key 44. To accomplish this, software 54 includes conditional access agent 56.

The conditional access agent 56 is responsive to communication from the conditional access server 20 and controls the decryption process. Through the conditional access agent 56, the conditional access server 20 entitles the pre-encryption server 18 to decrypt the encrypted content 36. Such entitlement includes permission to request, receive, and decrypt the encrypted content 36 and, upon the pre-encryption server 18 receiving the encrypted content 36, to perform those functions. This allows the pre-encryption server 18 to receive the encrypted content 36 and the conditional access agent 56 to begin decrypting the encrypted content 36 as the encrypted content 36 is being received by the pre-encryption server 18. In other words, the conditional access agent 56 can begin decrypting the encrypted content 36 while the pre-encryption server 18 is still receiving the encrypted content 36.

The pre-encryption server 18 sends the re-encrypted content 46 to the VoD server 24 thereby providing the re-encrypted content 46 to the VoD system 10. In addition, since the originally encrypted content is no longer available in the VoD system and keys have been deleted, the entitlement received by the pre-encryption server 36 is now meaningless and may be revoked or allowed to expire.

## Claims

1. A method for re-encrypting encrypted content on a Video-on-Demand system, the method comprising:
• receiving encrypted content from a Video-on-Demand server, wherein the Video-on-Demand server is used for storing the encrypted content and is capable of sending the encrypted content to a user's equipment;
• receiving from a conditional access server a first key used to encrypt the encrypted content;
• decrypting the encrypted content using the first key to produce decrypted content;
• accessing a second key; and
• re-encrypting the decrypted content using the second key to produce re-encrypted content.

2. The method of claim 1 further comprising sending the re-encrypted content to the Video-on-Demand server, wherein the Video-on-Demand server stores the re-encrypted content and is capable of sending the re-encrypted content to the user's equipment.

3. The method of claim 2 wherein, after sending the re-encrypted content to the Video-on-Demand server, the method further comprising deleting the re-encrypted content.

4. The method of claim 1 wherein the conditional access server stores the second key.

5. The method of claim 1 wherein accessing the second key comprises receiving the second key from the conditional access server.

6. The method of claim 1 wherein, after re-encrypting the decrypted content using the second key to produce the re-encrypted content, the method further comprising:
• deleting the encrypted content;
• deleting the decrypted content;
• deleting the first key; and
• deleting the second key.

7. The method of claim 1 wherein, prior to receiving the encrypted content from the Video-on-Demand server, the method further comprising:
• receiving un-encrypted content from a first node;
• accessing the first key;
• encrypting the un-encrypted content using the first key to produce the encrypted content; and
• sending the encrypted content to the Video-on-Demand server.

8. The method of claim 7 wherein accessing the first key comprises receiving the first key from the conditional access server.

9. A system for re-encrypting encrypted content on a Video-on-Demand system, the system comprising:
• at least one interface; and
• at least one control system associated with the at least one interface and adapted to:
• receive the encrypted content stored on a Video-on-Demand server, wherein the Video-on-Demand server is used for storing the encrypted content and is capable of sending the encrypted content to a user's equipment;
• receive from a conditional access server a first key used to encrypt the encrypted content;
• decrypt the encrypted content using the first key to produce decrypted content;
• access a second key; and
• re-encrypt the decrypted content using the second key to produce re-encrypted content.

10. A server in a video-on-demand system, the server comprising:
• an interface communicably coupled to a middleware server and a conditional access server; and
• a control system providing a conditional access agent and adapted to:
• receive communication from the middleware server;
• receive communication from the conditional access server; and
• in response to the communication received from the middleware server and the conditional access server:
• request and receive encrypted content from a Video-on-Demand server;
• decrypt the encrypted content using a first key to produce decrypted content;
• re-encrypt the decrypted content using a second key to produce re-encrypted content; and
• send the re-encrypted content to the Video-on-Demand server.

11. A network for re-encrypting encrypted content on a Video-on-Demand system comprising:
• means for receiving encrypted content from a Video-on-Demand server, wherein the Video-on-Demand server is used for storing the encrypted content and is capable of sending the encrypted content to a user's equipment;
• means for receiving from a conditional access server a first key used to encrypt the encrypted content;
• means for decrypting the encrypted content using the first key to produce decrypted content;
• means for accessing a second key; and
• means for re-encrypting the decrypted content using the second key to produce re-encrypted content.
